# EUROPEAN PATENT SPECIFICATION

(11) **EP 0 564 258 B1**
(45) Date of publication and mention of the grant of the patent: **18.09.1996**
(21) Application number: 93302501.7
(22) Date of filing: 30.03.1993
(51) Int. Cl.: H02K 1/02

(54) **A miniature motor**
Miniaturmotor
Moteur miniature

(30) Priority: 31.03.1992 JP 75071/92
(43) Date of publication of application: 06.10.1993
(73) Proprietor: MABUCHI MOTOR KABUSHIKI KAISHA, Matsudo-shi, Chiba-ken (JP)
(72) Inventor: Suzuki, Satoshi, Mabuchi Motor Kabushiki Kaisha, Matsudo-shi, Chiba-ken (JP)
(74) Representative: Hitchcock, Esmond Antony

(56) References cited:
- DE-A- 3 700 319
- PATENT ABSTRACTS OF JAPAN vol. 13, no. 99 (E-724) 8 March 1989 & JP-A-63 274 114
- PATENT ABSTRACTS OF JAPAN vol. 13, no. 196 (E-755) 10 May 1989 & JP-A-01 018 206
- PATENT ABSTRACTS OF JAPAN vol. 16, no. 429 (E-1261) 8 September 1992 & JP-A-04 150 004

## Description

This invention relates to a miniature electric motor of the kind used for example, in optical equipment, audio equipment, and other precision equipment. Particularly it relates to a motor configured so as to reduce mechanical noise and vibration by providing a pair of permanent magnets constituting the stator which generate so-called magnetic side pressure to the rotor.

Magnetic side pressure is generated by providing one of the permanent magnets forming the stator with a greater magnetic force than the other. Prior art document GB-A-2185640 discloses such an arrangement. However, it is necessary to provide some mechanism for distinguishing one magnet from the other to ensure proper selection at the motor assembly stage. Two known mechanisms are spray or dip coating of a colouring material, and the formation of an identification mark such as a recess in an end surface of a magnet. However, these mechanisms have disadvantages. A coating tends not to be permanent, and can result in dimensional inconsistencies. An identification mark such as a recess must be relatively small if it is not to adversely affect motor performance, but must be large enough to be visible. Each mechanism requires an additional manufacturing step.

The present invention is directed to a miniature electric motor of the above kind in which a rotor is mounted for rotation in a housing supporting a pair of permanent rare-earth plastic magnets forming the motor stator. The magnetic forces of the magnets are different to impart magnetic side pressure to the rotor. According to the invention, in order to distinguish the magnets one is formed from a material containing a colouring. Normally, the amount of colouring is in the range 1% to 5% by weight of the magnet material.

The invention provides a means of differentiating magnets having different magnetic properties which is effective from the stage at which the colouring is added to the raw material of the magnet. The risk that a magnet will be wrongly selected is substantially eliminated, and motor assembly can therefore be significantly facilitated.

The invention will now be described by way of example and with reference to the accompanying schematic drawings wherein:
Figure 1 is a part-sectional side view of a miniature motor in which the present invention can be applied;
Figure 2 is a perspective view showing a known mechanism for differentiating between permanent-magnets in a motor of the type shown in Figure 1; and
Figure 3 is a sectional transverse view of the motor of Figure 1 illustrating how the present invention can enable the magnets of the stator to be easily differentiated.

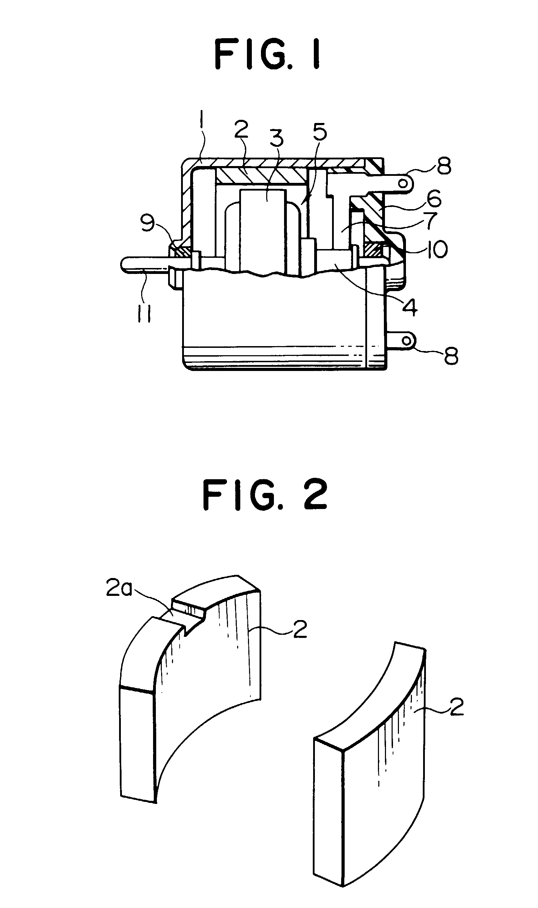

The motor shown in Figure 1 has a cylindrical housing, formed of mild steel for example, and closed at one end. A pair of permanent magnets 2 formed into an essentially C shape in cross section are fitted to the inner circumferential surface of the housing. The housing 1 is constructed so that a rotor comprising an armature 3 facing the permanent magnets 2, and a commutator 4 can be incorporated. An end cap 6 formed of a synthetic resin or other insulating material is engaged with the open end of the housing 1. Brush arms 7 are provided on the end cap 6 to make sliding contact with the commutator 4 and are electrically connected to input terminals 8. Bearings 9, 10 are mounted in the closed end of the housing 1 and the central part of the end cap 6, so as to rotatably support a shaft 11 constituting the rotor 5. The motor is driven in the conventional way by current fed from the input terminals to the armature 3 via the brush arms 7. The rotor is thus caused to rotate in the magnetic field formed by the permanent magnets 2, and thereby drive external equipment (not shown) via the shaft 11.

In a miniature motor of this type, it is customary to provide a slight gap or tolerance between the shaft 11 and the bearings 9 and 10. If the shaft 11 wobbles in the bearings 9 and 10 during the rotation of the rotor 5, abnormal noise could occur. To prevent the mechanical noise or vibration caused by the wobbling of the shaft 11, the magnets are selected to have different magnetic forces so that the rotor 5 is attracted to the stronger magnet. In such a motor, some means is needed to visually identify the difference in magnetic properties of the permanent magnets 2.

The most common identifying means is to spray or dip one the magnets with a colouring material after moulding. However, this requires an additional step in the assembly process, necessitating additional time and manhours, leading to increased cost. Further, there is a possibility that the colouring material will peel off or fade in subsequent processes, resulting in the failure of its identifying function. In addition, dimensional variations may occur due to the uneven coating thickness of the colouring material, resulting in reduced mounting accuracy of the permanent magnets 2.

Another identifying mechanism is illustrated in Figure 2 in which an identifying part is provided in the external appearance or shape of one of the permanent magnets 2. A recess 2a is provided an end face of any one of the permanent magnets 2 to form an identification mark. Although such a mark has the advantages that it can be automatically formed in the moulding process of permanent magnets 2 by machining part of the moulding die, and that it never disappears, the recess 2a cannot be made too large. There is thus a limitation on its ready visibility as an identification mark. Further, it is not practical to change the shape of any one of the permanent magnets 2 to a large extent because such a change may adversely affect the properties of the motor. Finally, this mechanism requires two sets of moulding dies, leading to increased cost.

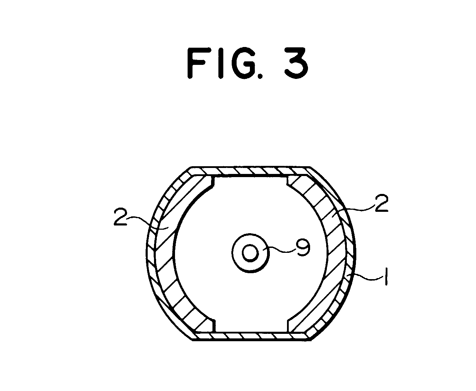

In the arrangement illustrated in Figure 3, each permanent magnet 2 is made of a Nd-Fe-B plastic magnet material, for example. That is, fine Nd-Fe-B magnetic powder is mixed and kneaded at high temperatures with a polyamide thermoplastic resin, such a nylon 12, nylon 6, nylon 66, etc., and extruded into pellets. The pellets are delivered to an injection-moulding metal die to form into a moulding having a predetermined shape and size. A typical blend ratio of Nd-Fe-B fine powders and a thermoplastic resin as the binder is 7:3 by volume, and 9:1 by weight, but the ratios may be selected appropriately in accordance with the required properties. The magnetic properties of magnets made in this way can be made different from selection of the grades of magnetic powder used.

In order to visibly differentiate between the permanent magnets 2 one of them is injection moulded using red-coloured pellets prepared by adding 1 - 5 wt.% red oxide to the resin mixture prior to extrusion. With a red-oxide content less than 1 wt.%, the colouring effect is reduced, because the Nd-Fe-B fine powder is inherently black in colour. If the red-oxide content exceeds 5 wt.%, we have found that the magnetic properties of the permanent magnets 2 can deteriorate.

With the arrangement described above, permanent magnets 2 having different specifications, i.e., different magnetic properties, can be easily and clearly identified by visual inspection by using pellets containing a colouring material, such as red oxide, in their manufacture.

Although an Nd-Fe-B material has been specified above as the rare-earth material for the magnets 2, other rare-earth magnetic materials may be used. Other suitable binder and colouring materials can also be used.

The present invention can achieve the following effects.
(1) The manufacture, including parts control, of miniature motors with a magnetic side-pressure specification can be carried out extremely easily and efficiently.
(2) The need for additional colouring processes or other mechanisms to identify permanent magnets having different magnetic properties can be eliminated, and the magnets can be moulded with the same dies. This leads to reduced manufacturing cost.
(3) Since permanent magnets can be applied to miniature motors in their as-moulded state, their dimensional accuracy can be improved, and motor parts, including the permanent magnets, can be easily and accurately mounted inside the housing.
(4) Since permanent magnets having different magnetic properties can be identified by visual inspection throughout the entire manufacturing process from the raw material stage, and even in the recycling process in which recycled materials are moulded into permanent magnets, the entry of foreign matter, assembly errors and other unwanted accidents can be prevented. Thus, the quality and reliability of miniature motors can be substantially improved.

## Claims

1. A miniature electric motor comprising a rotor (5) mounted for rotation in a housing (1) supporting a pair of permanent rare-earth plastic magnets (2) forming the motor stator, the magnetic forces of the magnets being different to impart magnetic side pressure to the rotor (5) CHARACTERISED IN THAT one of the magnets (2) is formed in a material containing a colouring.

2. An electric motor according to Claim 1 wherein the amount of colouring in the material of the one magnet is in the range 1% to 5% by weight.

## Patentansprüche

1. Elektrischer Miniaturmotor, aufweisend einen in einem Gehäuse (1) drehbar angebrachten Rotor (5), das ein Paar Seltenerdkunststoff-Permanentmagnete (2) trägt, die den Motorstator bilden, wobei die Magnetkräfte der Magnete verschieden sind, um auf den Rotor (5) magnetischen Seitendruck zu übertragen,
dadurch gekennzeichnet,
daß einer der Magnete (2) aus einem eine Farbgebung enthaltenden Material gebildet ist.

2. Elektrischer Motor nach Anspruch 1,
in welchem der Anteil eines farbgebenden Mittels im Material des einen Magneten im Bereich von 1 Gew.% bis 5 Gew.% liegt.

## Revendications

1. Moteur électrique miniature comprenant un rotor (5) monté en rotation dans un logement (1) supportant une paire d'aimants en plastique de terres rares, permanents (2) formant le stator du moteur, les forces magnétiques des aimants étant différentes pour transmettre une pression latérale magnétique au rotor (5), CARACTERISE EN CE QUE l'un des aimants (2) est réalisé en un matériau contenant un colorant.

2. Moteur électrique selon la revendication 1, dans lequel la quantité de colorant dans le matériau de l'un des aimants se situe dans la plage de 1 % à 5 % en poids.
